(19) Europäisches Patentamt

European Patent Office

Office européen des brevets

(11) **EP 1 129 987 B1**

(12) **EUROPÄISCHE PATENTSCHRIFT**

(45) Veröffentlichungstag und Bekanntmachung des Hinweises auf die Patenterteilung:
**28.04.2004 Patentblatt 2004/18**

(51) Int Cl.7: **C01B 3/38**, C01B 3/48

(21) Anmeldenummer: **01104206.6**

(22) Anmeldetag: **22.02.2001**

(54) **Gaserzeugungsvorrichtung**

Gas generating apparatus

Appareil de production de gaz

(84) Benannte Vertragsstaaten:
**DE FR GB IT**

(30) Priorität: **02.03.2000 DE 10010070**

(43) Veröffentlichungstag der Anmeldung:
**05.09.2001 Patentblatt 2001/36**

(73) Patentinhaber: **Ballard Power Systems AG**
**73230 Kirchheim / Teck-Nabern (DE)**

(72) Erfinder: **Keppeler, Berthold, Dr.**
**73230 Kirchheim/Teck (DE)**

(74) Vertreter: **Beyer, Andreas, Dr. et al**
**Wuesthoff & Wuesthoff,**
**Patent- und Rechtsanwälte,**
**Schweigerstrasse 2**
**81541 München (DE)**

(56) Entgegenhaltungen:
**WO-A-00/70697**          **US-A- 3 545 926**
**US-A- 4 052 176**

**Beschreibung**

Die vorliegende Erfindung betrifft ein Verfahren nach dem Oberbegriff des Patentanspruchs 1.

Brennstoffzellen besitzen gegenüber Verbrennungskraftmaschinen wegen ihrer Funktionsweise einen höheren energetischen Wirkungsgrad, weshalb sie zunehmend für die Stromerzeugung eingesetzt werden. Dieses schließt sowohl stationäre als auch mobile Anwendungen ein. Brennstoffzellen werden üblicherweise mit Wasserstoff betrieben. Da dieser nur schwer zu speichern ist, versucht man gerade für mobile Anwendungen, wie Kraftfahrzeuge, den Wasserstoff in Form von flüssigen Kraftstoffen bzw. Brennstoffen zu speichern. Derartige Kraftstoffe sind beispielsweise reine Kohlenwasserstoffe oder Alkohole. Für mobile Anwendungen wird heute überwiegend Methanol eingesetzt, das in einer Gaserzeugungsvorrichtung in Wasserstoff und $CO_2$ gespalten wird. Der so erzeugte Wasserstoff wird dann für den Betrieb einer Brennstoffzelle eines Fahrzeuges verwendet. Von Nachteil ist dabei jedoch die noch fehlende Methanolinfrastruktur und die geringe Speicherdichte von Methanol im Vergleich zu erdölbasierten Kraftstoffen. Auch wird der hohe energetische Wirkungsgrad eines Methanol-Brennstoffzellensystems durch die vorgelagerte Methanolherstellung nahezu egalisiert. Die Wasserstofferzeugung aus konventionellen flüssigen Treibstoffen wie Benzin, Diesel oder LPG ist für ein mobiles Brennstoffzellensystem deshalb eine interessant e Alternative. Ein solches Brennstoffzellensystem umfaßt eine Brennstoffzelle mit Kühlmedienanschluß und Luftversorgung sowie eine Gaserzeugungsvorrichtung.

Aus der US 3,545,926 A1 ist eine Gaserzeugungsvorrichtung mit einem Reformierungsreaktor zur Herstellung eines wasserstoffreichen Gases aus einem Brennstoff, Wasser und Sauerstoff, mit einem Shift-Reaktor zur Umwandlung von Kohlenmonoxid mit Hilfe von Wasser in Wasserstoff und mit einer nachgeschalteten Gasreinigungseinheit bekannt. Sowohl in den Reformierungsreaktor als auch in den Shiftreaktor wird Wasser aus einem nicht explizit dargestellten Wasser-Vorratsbehälter zugeführt.

Eine solche Gaserzeugungsvorrichtung weist insbesondere im mobilen Einsatz, beispielsweise zur Bereitstellung von Wasserstoff für Brennstoffzellen in Fahrzeuge, den Nachteil auf, daß ein Wasser-Vorratsbehälter vorgesehen werden muß, der bei Umgebungstemperaturen unter dem Gefrierpunkt einfrieren kann. Herkömmliche Frostschutzmittel müssen aufgrund ihrer Vergiftungswirkung für Reformierungskatalysatoren vor dem Zudosieren abgetrennt werden, was einen erheblichen Aufwand darstellt oder sogar unmöglich sein kann.

Die US-A-4,052,176 beschreibt ein Verfahren zum Erzeugen eines gereinigten, wasserstoffreichen Synthesegases im Zusammenhang mit der Sekundärförderung von Erdöl. In diesem Verfahren wird als polares Lösungsmittel zur Absorbtion von saurem Gas vorzugsweise Methanol verwendet, weil Methanol ein ohne weiteres erhältliches und kostengünstiges Lösungsmittel mit niedriger Viskosität, guter Beständigkeit gegen im Prozessgasstrom enthaltene Spurenelemente sowie guten Wassertrocknungseigenschaften sei. Erwähnt ist auch, dass Methanol vorteilhafte Frostschutzeigenschaften aufweist.

Die nicht vorveröffentlichte WO-A-00/70697 beschreibt ein Brennstoffzellensystem, bei dem auf separate Brennstoff-Vorratsbehälter und Wasser-Vorratsbehälter verzichtet wird und statt dessen ein einziger Vorratsbehälter mit einer Brennstoff/Wasser-Emulsion verwendet wird.

Der Erfindung liegt die Aufgabe zugrunde, ein Gaserzeugungsverfahren anzugeben, welches die oben erwähnten Probleme umgeht.

Zur Lösung dieser Aufgabe wird ein Verfahren mit den Merkmalen des Anspruches 1 vorgeschlagen

Die Erfindung beruht auf dem Einsatz von Methanol als Frostschutzmittel für den Wasser-Vorratsbehälter in einer herkömmlichen Gaserzeugungsvorrichtung. Der Wasser-Vorratsbehälter dient hierbei zur Bereitstellung von Wasser für die im Shift-Reaktor durchgeführte Wassergas-Shiftreaktion. Weiterhin kann bei Gaserzeugungsvorrichtungen, bei denen im Reformierungsreaktor zumindest auch eine Wasserdampfreformierung abläuft, der Wasser-Vorratsbehälter auch zur Bereitstellung des Wassers für Wasserdampfreformierung verwendet werden. Das Methanol kann unabhängig von dem für die Reformierungsreaktion verwendeten Brennstoff eingesetzt werden. Das heißt, für die Reformierungsreaktion selbst kann auch Methanol verwendet werden, aber auch beliebige andere geeignete Brennstoffe, wie längerkettige Kohlenwasserstoffe, sowie höhere Alkohole, Benzin, Diesel, LPG (Uquid Petrol Gas) und NG (Natural Gas), oder Dimethylether.

In dem Wasser-Vorratsbehälter wird also anstelle von reinem Wasser ein Wasser/Methanol-Gemisch bereitgestellt. Da der Gefrierpunkt eines solchen Wasser/Methanol-Gemisches vom Mischungsverhältnis abhängt, kann durch eine entsprechende Vorgabe eines Mischungsverhältnisses der gewünschte Frostschutz eingestellt werden. Die Verwendung von Methanol als Frostschutzmittel hat den Vorteil, daß das Methanol in herkömmlichen Shift-Reaktoren bei den üblichen Betriebsbedingungen und an den üblichen Shift-Katalysatoren über eine Wasserdampfreformierung in ein wasserstoffreiches Gas umgesetzt werden kann. Dies hat den Vorteil, daß nicht nur ausreichender Frostschutz gewährleistet wird und die Katalysatoren vor einer Beschädigung bewahrt werden, sondern auch noch die Wasserstoffausbeute in der Gaserzeugungsvorrichtung verbessert wird.

Auch im Reformierungsreaktor stört das dem Wasser beigemischte Methanol nicht. Sofern Methanol als Primärbrennstoff verwendet wird, erhöht sich durch das Methanol im Wasser-Vorratsbehälter lediglich der Methanolanteil im Reformierungsreaktor. Bei Verwendung anderer Brennstoffe wird das Methanol gleichzeitig mit dem eigentlichen Brennstoff zu Wasserstoff umgesetzt.

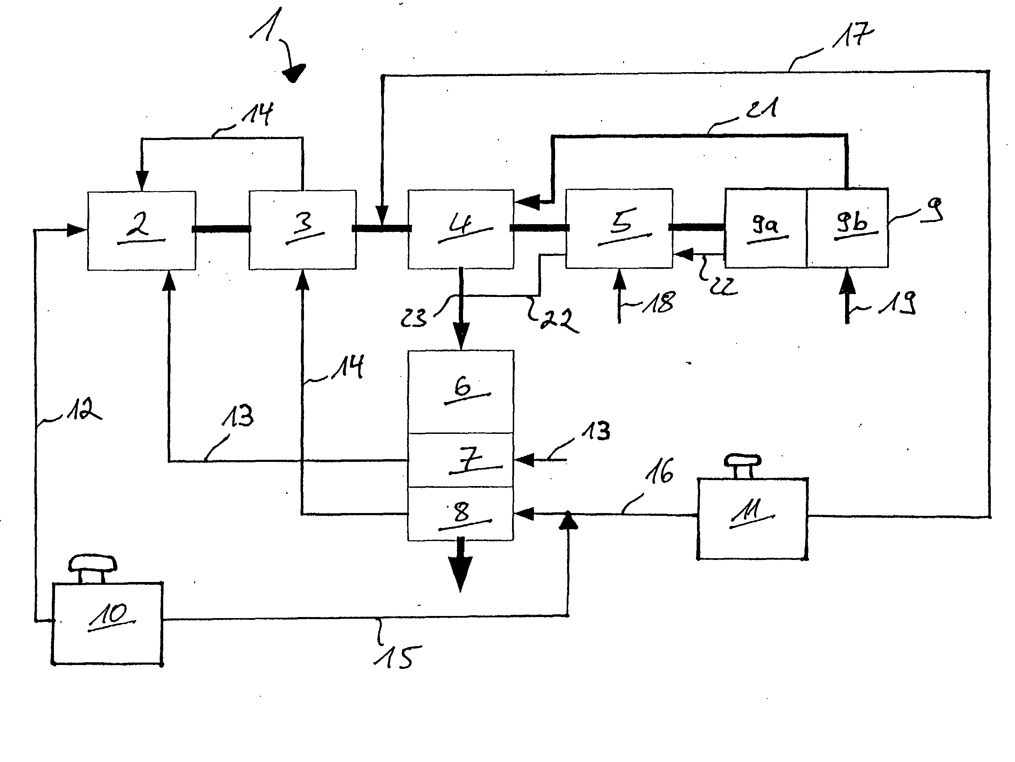

Die Erfindung ist anhand eines Ausführungsbeispieles in der Zeichnung dargestellt und wird im folgenden unter Bezugnahme auf die Zeichnung näher erläutert, die ein Blockschaltbild einer Gaserzeugungsvorrichtung zur Durchführung des erfindungsgemäßen Verfahrens zeigt.

Die in der Zeichnung dargestellte Gaserzeugungsvorrichtung 1 umfaßt einen Reformierungsreaktor 2, einen CO-Shift-Reaktor 4, eine CO-Reinigungseinheit 5, einen katalytischen Brenner 6 mit Verdampfer 8 sowie zwei Wärmetauscher 3, 7. An die Gaserzeugungsvorrichtung 1 ist mindestens eine Brennstoffzelle 9 angeschlossen, die eine Anode 9a und eine Kathode 9b umfaßt. Der Übersichtlichkeit halber ist in der Figur nur eine einzelne Brennstoffzelle dargestellt, jedoch ist in der Praxis ein aus einen Stapel mehrerer Brennstoffzellen gebildeter Brennstoffzellenblock vorgesehen (sogenannter 'Stack'). Weiterhin ist ein Brennstoff-Vorratsbehälter 10 und ein Wasser-Vorratsbehälter 11 vorgesehen.

Bekannterweise kann im Reformierungsreaktor 2 Wasserstoff aus einem Brennstoff durch eine partielle-Oxidations-Reformierung, nachfolgend als POX-Reformierung bezeichnet, entsprechend der Gleichung:

$$-(CH_2)- + 1/2O_2 \text{ (Luft)} \Rightarrow H_2 + CO$$

und/oder die endotherme Dampfreformierung entsprechend der Gleichung:

$$-(CH_2)- + 2H_2O \Rightarrow 3H_2 + CO_2$$

erzeugt werden. Es ist auch eine Kombination der beiden Prozesse möglich, die zu autothermen Betriebsweisen führt.

Der Reformierungsreaktor 2 wird mit flüssigem und/oder gasförmigem Brennstoff sowie Luftsauerstoff beziehungsweise Wasser betrieben. Für die Zuführung von flüssigem Brennstoff ist der Reformierungsreaktor 2 über eine Leitung 12 mit dem Brennstoff-Vorratsbehälter 10 verbunden. Weiterhin ist eine Leitung 13 zur Zufuhr von Luftsauerstoff zum Reformierungsreaktor 2 vorgesehen. Schließlich ist noch eine Leitung 14 zur Zufuhr eines gasförmigen Brennstoff/Wassergemisches aus dem Verdampfer 8 vorgesehen. Der Verdampfer 8 ist wiederum über Leitungen 15, 16 mit dem Brennstoff-Vorratsbehälter 10 beziehungsweise dem Wasser-Vorratsbehälter 11 verbunden. Die Leitung 14 zwischen Verdampfer 8 und Reformierungsreaktor 2 ist durch den Wärmetauscher 3 geführt, so daß dem bereits verdampften Brennstoff/Wassergemisch im Wärmetauscher 3 mit Hilfe des aus dem Reformierungsreaktor 2 austretenden heißen Reformatgasstromes noch weitere thermische Energie zugeführt wird. Der Reformatgasstrom, das heißt das wasserstoffhaltige Gas mit Kohlenmonoxidanteilen, wird dabei abgekühlt.

Der Reformierungsreaktor 2 ist mit einem geeigneten Katalysatormaterial, z.B. einem Edelmetallkatalysator befüllt. Je nach der Eduktzusammensetzung wird der Reformierungsreaktor 2 als POX-Reaktor, d.h. als Reaktor für eine reine partielle Oxidations-Reformierung, beziehungsweise zusätzlich als Wasserdampfreformierungsreaktor, das heißt autotherm betrieben.

Der wasserstoffhaltige Reformatgasstrom mit Kohlenmonoxidanteilen durchläuft die zwei Gasreinigungseinheiten 4, 5, wobei die erste Gasreinigungseinheit 4 ein CO-Shift-Reaktor und die zweite Gasreinigungseinheit 5 vorzugsweise ein Reaktor für die selektive Oxidation von Kohlenmonoxid ist. Als zweite Gasreinigungseinheit 5 können jedoch auch andere bekannte Vorrichtungen, beispielsweise eine Membrantrenneinheit oder eine Methanisierungsstufe eingesetzt werden. Die beiden Gasreinigungseinheiten 4, 5 sind seriell hintereinander geschaltet, wobei der CO-Shift-Reaktor 4 als erste von dem Reformatgas zu durchströmende Einheit vorgesehen ist. Zwischen dem Wärmetauscher 3 und dem CO-Shift-Reaktor 4 ist eine Leitung 17 vorgesehen, über die aus dem Wasser-Vorratsbehälter 11 sogenanntes Shift-Wasser in den Reformatgasstrom eingebracht wird. Der wasserstoffreiche Reformatgasstrom durchströmt die Gasreinigungseinheiten 4, 5 und wird anschließend der Brennstoffzelle 9 zugeführt. Im CO-Shift-Reaktor 4 wird das Kohlenmonoxid mit dem Shift-Wasser zu Kohlendioxid und Wasserstoff umgesetzt. Dabei wird ein herkömmlicher CO-Shift-Reaktor 4 mit bekanntem Katalysatormaterial verwendet. Zur Zufuhr von Luftsauerstoff in die zweite Gasreinigungseinheit 5 ist eine weitere Leitung 18 vorgesehen.

Der Kathode 9b der Brennstoffzelle 9 wird über eine Leitung 19 sauerstoffhaltiges Gas, vorzugsweise Luftsauerstoff zugeführt, welches nach dem Durchströmen der Kathode 9b über eine Leitung 21 wieder abgeführt wird. Diese Leitung 21 für die Abluft der Kathode 9b wird durch den CO-Shift-Reaktor 4 hindurch geführt, um den CO-Shift-Reaktor 4 zu kühlen und die Abluft für die Verbrennung im katalytischen Brenner 6 vorzuwärmen. Die Leitung 22 für das Abgas der Anode 9a ist durch die zweite Gasreinigungseinheit 5 hindurch geführt, um die Gasreinigungseinheit 5 zu kühlen und das Abgas ebenfalls für die Verbrennung im katalytischen Brenner 6 vorzuwärmen. Die Leitungen 21 und 22 sind über eine Verbindung 23 vor dem katalytischen Brenner 6 zusammengeführt, so daß der Restwasserstoff im Anodenabgas als Brennstoff im katalytischen Brenner 6 verwendet. Es ist jedoch auch möglich, zusätzlichen Luftsauerstoff oder auch zusätzlichen Brennstoff, beispielsweise aus dem Brennstoff-Vorratsbehälter 10 in den katalytischen Brenner 6 zuzuführen.

Dem katalytischen Brenner 6 ist der Verdampfer 8 nachgeschaltet, der mit den heißen Abgasen des katalytischen Brenners 6 betrieben wird. Dem Verdampfer 8 können die Medien wie dargestellt über eine einzige Leitung 16 oder aber auch über separate Leitungen zugeführt werden. Ebenfalls ist es möglich, für das Wasser und den Brennstoff separate Wärmetauscher 7 vorzusehen. Der Wärmetauscher 7 ist an dem katalytischen Brenner 6 und/oder dem Verdampfer 8 angeordnet. Über die Leitung 13 wird Umgebungsluft in den Wärmetauscher 7 eingeleitet und in diesem erhitzt, bevor sie mit Hilfe der Leitung 14 in den Reformierungsreaktor 2 geleitet wird.

In allen Leitungen 12 - 19 können selbstverständlich Dosiervorrichtungen vorgesehen werden. Diese sind der Übersicht halber jedoch in der Zeichnung nicht dargestellt. Weiterhin kann anstatt des genannten Luftsauerstoffs auch jeweils ein beliebiges anderes sauerstoffhaltiges Medium verwendet werden.

Vor dem CO-Shift-Reaktor 4 wird dem heißen Gasstrom über die Leitung 17 Wasser aus dem Wasser-Vorratsbehälter 11 injiziert, wobei das Kohlenmonoxid im CO-Shift-Reaktor 4 mit dem Shift-Wasser zu Kohlendioxid und Wasserstoff umgesetzt wird. Dabei wird ein herkömmlicher CO-Shift-Reaktor mit bekanntem Katalysatormaterial verwendet.

Im Wasser-Vorratsbehälter 11 wird nun anstelle von reinem Wasser ein Wasser/Methanol-Gemisch vorgehalten. Der Gefrierpunkt dieses Wasser/Methanol-Gemisches hängt vom Mischungsverhältnis ab, wobei sich der Gefrierpunkt mit zunehmenden Methanolanteil erniedrigt. Daher kann das Einfrieren des Wasser-Vorratsbehälters 11 durch die Zugabe einer geeigneten Menge an Methanol verhindert werden. Das heißt der gewünschte Frostschutz kann über das Mischungsverhältnis eingestellt werden. Ein Frostschutz bis -10° C kann beispielsweise bereits durch Zugabe einer geringen Menge Methanols realisiert werden.

Die Verwendung von Methanol als Frostschutzmittel weist den Vorteil auf, daß es keine schädigende Wirkung auf den Katalysator im CO-Shift-Reaktor 4 hat und daher vor dem Einbringen in den CO-Shift-Reaktor 4 auch nicht aus dem Wasser abgetrennt werden muß. Vielmehr entsprechen die Reaktionsparameter Druck und Temperatur für eine CO-Shift-Reaktion den Reaktionsbedingungen für eine Wasserdampfreformierung von Methanol. Die in CO-Shift-Reaktoren verwendeten Katalysatormaterialien sind daher auch für die Wasserdampfreformierung von Methanol aktive Katalysatoren. Deshalb wird das Methanol im Wasser/Methanol-Gemisch im CO-Shift-Reaktor 4 durch eine Wasserdampfreformierungsreaktion in ein wasserstoffreiches Gas umgesetzt und trägt somit zu einer Erhöhung der Wasserstoffausbeute bei.

Soll im Reformierungsreaktor 2 auch eine Wasserdampfreformierung ablaufen, so kann das Wasser/Methanol-Gemisch aus dem Wasser-Vorratsbehälter 11 auch hierfür eingesetzt werden. Auch für den Reformierungsreaktor 2 wirkt das Methanol nicht störend.

Vielmehr wird es ebenfalls zu Wasserstoff umgesetzt. Dabei ist es völlig egal, ob im Brennstoff-Vorratsbehälter 10 ebenfalls Methanol oder ein anderer geeigneter Brennstoff für die Reformierungsreaktion gespeichert ist und aus diesem dem Reformierungsreaktor 2 zugeführt wird.

Geeignete Brennstoffe sind insbesondere längerkettige Kohlenwasserstoffe, so wie höhere Alkohole, Benzin, Diesel, LPG (Liquid Petrol Gas) und NG (Natural Gas), oder Dimethylether.

Obwohl das erfindungsgemäße Verfahren beziehungsweise die entsprechende Vorrichtung in dieser Anmeldung vorzugsweise anhand einer mobilen Anwendung beschrieben wurde soll der Schutzbereich nicht darauf beschränkt sein, sondern soll sich auch auf eine entsprechende Anwendung auf stationäre Anlagen erstrecken.

## Patentansprüche

1. Verfahren zum Erzeugen eines wasserstoffreichen, kohlenmonoxidarmen Gases, als Brennstoff für eine Brennstoffzelle, aus einem Wasser/Brennstoff-Gemisch durch katalytische Wasserdampfreformierung und/oder aus einem Sauerstoff/Brennstoff-Gemisch durch partielle Oxidation, wobei eine Gaserzeugungsvorrichtung (1) mit mindestens einem Brennstoff-Vorratsbehälter (10), einem Reformierungsreaktor (2), einem CO-Shift-Reaktor (4), einer Gasreinigungseinheit (5) und einer Leitung (17) zur Zufuhr von Wasser aus einem Wasser-Vorratsbehälter (11) in den dem CO-Shift-Reaktor (4) zugeführten Reformatgasstrom verwendet wird, **dadurch gekennzeichnet,** **daß** der Wasser-Vorratsbehälter (11) ein Wasser/Methanol-Gemisch mit einem zur Gewährleistung eines ausreichenden Frostschutzes geeigneten Mischungsverhältnis enthält.

2. Verfahren nach Anspruch 1, **dadurch gekennzeichnet,** **daß** der Brennstoff-Vorratsbehälter (10) Methanol oder einen anderen für den Reformierungsreaktor geeigneten Brennstoff enthält.

## Claims

1. A process for generating a gas which is rich in hydrogen and low in carbon monoxide, as the fuel for a fuel cell, from a water/fuel mixture by catalytic water vapour reforming and/or from an oxygen/fuel mixture by partial oxidation, in which a gas generating apparatus (1) having at least one fuel reservoir (10), a reforming reactor (2), a CO shift reactor (4), a gas purification unit (5) and a line (17) for supplying water from a water reservoir (11) to the reformate gas flow supplied to the CO shift reactor (4) is used, **characterised in that** the water reservoir (11) contains a water/methanol mixture having a mixing ratio suitable for ensuring adequate protection from frost.

**2.** A process according to Claim 1, **characterised in that** the fuel reservoir (10) contains methanol or another fuel suitable for the reforming reactor.

## Revendications

**1.** Procédé de production d'un gaz riche en hydrogène et pauvre en monoxyde de carbone utilisé comme combustible dans une pile à combustible, à partir d'un mélange eau/combustible par reformage de vapeur d'eau catalytique et/ou à partir d'un mélange oxygène/combustible par oxydation partielle au moyen d'un dispositif de production de gaz (1) comprenant au moins un réservoir de carburant (10), un réacteur de reformage (2), un réacteur de transformation de CO (4), une unité de purification de gaz (5) et une conduite (17) pour l'apport d'eau depuis un réservoir d'eau (11) dans le flux de gaz de reformat introduit dans le réacteur de transformation de CO (4),
**caractérisé en ce que**
le réservoir d'eau (11) contient un mélange eau/méthanol avec un rapport de mélange approprié pour garantir une protection suffisante contre le gel.

**2.** Procédé selon la revendication 1,
**caractérisé en ce que**
le réservoir de combustible (10) contient du méthanol ou un autre combustible approprié pour le réacteur de reformage.